# EUROPEAN PATENT SPECIFICATION

(11) **EP 3 915 937 B1**
(45) Date of publication and mention of the grant of the patent: **30.08.2023**
(21) Application number: 20765527.5
(22) Date of filing: 06.03.2020
(51) Int. Cl.: C01B 32/158, C01B 32/162, H01M 4/587, H01M 10/0525, H01M 50/417

(54) **CARBON NANOTUBE, ELECTRODE INCLUDING CARBON NANOTUBE, AND SECONDARY BATTERY**
KOHLENSTOFFNANORÖHRE, ELEKTRODE MIT KOHLENSTOFFNANORÖHRE UND SEKUNDÄRBATTERIE
NANOTUBE DE CARBONE, ÉLECTRODE COMPRENANT LE NANOTUBE DE CARBONE, ET BATTERIE SECONDAIRE

(30) Priority: 07.03.2019 KR 20190026479; 08.03.2019 KR 20190027180
(43) Date of publication of application: 01.12.2021
(73) Proprietor: LG Energy Solution, Ltd., Seoul 07335 (KR)
(72) Inventor: KIM, Tae Gon, Daejeon 34122 (KR); JUNG, Wang Mo, Daejeon 34122 (KR); YOON, Kwang Woo, Daejeon 34122 (KR); SON, Seung Yong, Daejeon 34122 (KR); CHAE, Byung Joon, Daejeon 34122 (KR); PARK, Sin Young, Daejeon 34122 (KR); SOHN, Se Hui, Daejeon 34122 (KR); LEE, Dae Jin, Daejeon 34122 (KR); LEE, Bo Ram, Daejeon 34122 (KR); KIM, Hak Yoon, Daejeon 34122 (KR); KIM, Seul Ki, Daejeon 34122 (KR); HWANG, Jin Young, Daejeon 34122 (KR)
(74) Representative: Hoffmann Eitle
(86) International application number: PCT/KR2020/003212
(87) International publication number: WO 2020/180163

(56) References cited:
- EP-A1- 3 053 877
- EP-A2- 3 438 045
- JP-A- 2018 512 355
- JP-B2- 3 241 850
- JP-B2- 6 469 212
- KR-A- 20020 072 594
- KR-A- 20170 031 061
- HERNANDEZ-ORTIZ M. ET AL: "Morphology and surface structure of nanocarbon allotropes: A comparative study", FULLERENES, NANOTUBES AND CARBON NANOSTRUCTURES, vol. 24, no. 5, 3 May 2016 (2016-05-03), pages 345-352, XP55885056, US ISSN: 1536-383X, DOI: 10.1080/1536383X.2016.1146706
- VELASQUEZ MAURICIO ET AL: "Chemical and morphological characterization of multi-walled-carbon nanotubes synthesized by carbon deposition from an ethanol-glycerol blend", DIAMOND AND RELATED MATERIALS, vol. 50, 1 November 2014 (2014-11-01), pages 38-48, XP55884992, NL ISSN: 0925-9635, DOI: 10.1016/j.diamond.2014.08.015 Retrieved from the Internet: URL:https://www.sciencedirect.com/science/ article/pii/S0925963514001836/pdfft?md5=50 8f4dcebe14936b246793b9c21d220f&pid=1-s2.0- S0925963514001836-main.pdf>

## Description

### TECHNICAL FIELD

The present invention relates to a carbon nanotube having an La (100) of less than 7.0 nm when measured by XRD and a specific surface area of 100 m²/g to 196 m²/g, and an electrode and a secondary battery including the carbon nanotube.

### BACKGROUND ART

As technology development and demand for mobile devices have increased in recent years, the demand for secondary batteries as an energy source has been rapidly increased. Accordingly, various studies have been conducted on batteries which may meet various needs. In particular, research has been actively conducted on a lithium secondary battery having high energy density and excellent lifespan and cycle properties as a power source for such devices.

A lithium secondary battery means a battery including a positive electrode containing a positive electrode active material capable of intercalation/de-intercalation of lithium ions, a negative electrode containing a negative electrode active material capable of intercalation/de-intercalation of lithium ions, and a non-aqueous electrolyte containing lithium ions in an electrode assembly having a microporous separator interposed between the positive electrode and the negative electrode.

The positive electrode and/or the negative electrode may include a conductive material to improve conductivity. Typically, a viscous conductive material such as carbon black is mainly used, and in order to further improve conductivity, a linear conductive material such as a carbon nanotube and a carbon nanofiber and a planar conductive material such as a graphene are also used.

The graphene has an advantage of having excellent electrical conductivity. However, even though it is advantageous to form a graphene as a single layer in order to improve conductivity, a process for manufacturing the same in the form of a single layer is very complicated, so that manufacturing cost is increased. On the other hand, when a graphene has a thickness greater than or equal to a desired level, there is a problem in that the effect of improving electrical conductivity is insufficient. In addition, even when a graphene having a thickness of a desired level of 10 nm or less is used as a conductive material, it is difficult to easily migrate in an electrolyte solution in an electrode due to the excessive surface contact of the graphene, so that the resistance of the electrode increases, resulting in the deterioration in the performance of a battery.

Meanwhile, a typical carbon nanotube corresponding to the linear conductive material has an excellent electrical conductivity, but has an excessively high crystallinity, and thus, has a low flexibility and is rigid. Therefore, it is difficult for the carbon nanotube to be smoothly adhered along the surface of an active material particle, and the carbon nanotube is linearly arranged on a three-dimensional space randomly. Accordingly, the probability that the carbon nanotube and the active material particle are interconnected is lowered. Accordingly, a point or an area of contact between the active material particle and the carbon nanotube is reduced, which makes it difficult to secure a conductive path, and there is a problem in that the resistance of a battery increases. In addition, the typical carbon nanotube is not smoothly dispersed in a slurry for forming an electrode, so that the resistance in the electrode is not uniform, and there is a problem in that the lifespan properties of a battery are deteriorated.

Typically, in order to solve the above problems of a carbon nanotube, a method has been used which controls either the viscosity of a conductive material dispersion in which the carbon nanotube is pre-dispersed or the type of a dispersion agent included together in the conductive material dispersion. However, such a method does not change the physical properties of the carbon nanotube itself, and thus, has a limitation in solving the above-mentioned problems.

Fullerenes, Nanotubes and Carbon Nanostructures, vol. 24, no. 5, pp. 345-352 discloses processing and characterization of carbon allotropes, including multi-walled carbon nanotubes, by chemical purification and treatment in a mixture of nitric acid and sulfuric acid.

### DISCLOSURE OF THE INVENTION

### TECHNICAL PROBLEM

An aspect of the present invention provides a carbon nanotube capable of being smoothly adhered to an active material particle and being uniformly dispersed in an electrode, thereby lowering the resistance of the electrode and improving the lifespan properties of a battery, and an electrode and a secondary battery including the carbon nanotube.

### TECHNICAL SOLUTION

According to an aspect of the present invention, there is provided a carbon nanotube having
(a) an La(100) of less than 7.0 nm when measured by XRD;
(b) a specific surface area of 100 m²/g to 196 m²/g;
(c) a B-A value of 0.70 nm or greater, wherein A is an La(100) value (unit: nm) measured by XRD before graphitization treatment of the carbon nanotube at 2500°C, and B is an La(100) value (unit: nm) measured by XRD after the graphitization treatment; and
(d) a D-C value of 0.18 nm or less, wherein C is an Lc(002) value (unit: nm) measured by XRD before graphitization treatment of the carbon nanotube at 2500°C, and D is an Lc(002) value (unit: nm) measured by XRD after the graphitization treatment.

According to another aspect of the present invention, there is provided an electrode including the carbon nanotube.

According to yet another aspect of the present invention, there is provided a secondary battery including the electrode.

### ADVANTAGEOUS EFFECTS

According to the present invention, the La(100) of a carbon nanotube is less than 7.0 nm. That is, the carbon nanotube has a short growth unit (between nodes) and has a low crystallinity, and thus, has a higher flexibility than a typical carbon nanotube. Accordingly, an active material particle and the carbon nanotube may be smoothly adhered to each other, thereby increasing a contact area to reduce battery resistance. Also, the specific surface area of the carbon nanotube is as low as 100 m²/g to 196 m²/g, so that side reactions with an electrolyte solution may be minimized and the dispersion in an electrode may be smoothly achieved. Even when the carbon nanotube is used in a small amount, a conductive network in the electrode may be efficiently formed. Furthermore, there are many defects on the surface of the carbon nanotube, and the carbon nanotube includes a functional group containing oxygen in a high content, so that the carbon nanotube may be uniformly dispersed in an electrode slurry. Accordingly, the lifespan properties of a manufactured battery may be improved.

### BRIEF DESCRIPTION OF THE DRAWINGS

FIG. 1 is a schematic view of an Lc value and an La value, which respectively mean the crystallinity in a vertical direction and the crystallinity in a horizontal direction with respect to a growth axis of a carbon nanotube ((a) of FIG. 1), a TEM photograph of the carbon nanotube of the present invention ((b) of FIG. 1), and a TEM photograph of a typical carbon nanotube ((c) of FIG. 1).
FIG. 2 is TEM photographs of the carbon nanotube of Example 1 before graphitization treatment at 2500°C ((a) and (b) of FIG. 2) and TEM photographs of the carbon nanotube of Example 1 after the graphitization treatment ((c) and (d) of FIG. 2).
FIG. 3 is TEM photographs of the carbon nanotube of Comparative Example 1 before graphitization treatment at 2500°C ((a) and (b) of FIG. 3) and TEM photographs of the carbon nanotube of Comparative Example 1 after the graphitization treatment ((c) and (d) of FIG. 3).

### BEST MODE FOR CARRYING OUT THE INVENTION

Hereinafter, the present invention will be described in more detail to facilitate understanding of the present invention.

It will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In the present invention, a carbon nanotube has a graphite sheet in a cylinder shape of a nano-size diameter, and has a sp² coupling structure. At this time, depending on the angle and structure in which the graphite sheet is rolled, conductor properties or semiconductor properties may be exhibited.

In the present specification, an La(100) and an Lc(002) may be measured by X-ray diffraction (XRD) analysis. Specifically, the XRD analysis may use Bruker AXS D4 Endeavor XRD (voltage: 40 kV, current: 40 mA), and may be measured under a Cu Ka radiation (wavelength: 1.54 Å) condition at a scanning speed of 87.5 seconds per 0.02° from 2-Theta 10° to 90°. Among the measurement results, the full width at half-maximum (FWHM) of a (002) crystal peak in which 2θ appears near 20° to 30° and the full width at half-maximum of a (100) crystal peak in which 2θ appears near 38° to 50° may be measured, and an Lc(002) value and an La(100) value may be obtained by calculating through the Scherrer equation.

An A_{D}/A_{G} (ratio) of the present specification may be measured from a wavelength-peak graph at the time of the Raman spectrum measurement. Specifically, the A_{D}/A_{G} is a value obtained by fitting the graph by setting a base line so that a D peak and a G peak nay be distinguished, and then dividing the graph area (A_{D}) of a portion in which the D peak appears by the graph area (A_{G}) of a portion in which the G peak appears (Using built-in software, NRS-2000B, Jasco Co., Ltd.). In the Raman spectrum, a G peak near 1590 cm⁻¹ is due to an E_{2g} vibrational mode of a sp² coupling of carbon, and a D peak near 1350 cm⁻¹ appears when there is a defect in the sp² coupling of carbon.

In the present specification, the specific surface area of carbon nanotube was measured by a BET method, and specifically, was calculated by obtaining the amount of nitrogen gas adsorption at a liquid nitrogen temperature (77 K) using BELSORP-mini II of BEL Japan Co., Ltd.

In the present specification, the content of a functional group containing oxygen atoms in a carbon nanotube was measured by an elemental analysis method using the ONH836 analyzer of LECO Co., Ltd.

### <Carbon nanotube>

A carbon nanotube according to an embodiment of the present invention has an La(100) of less than 7.0 nm when measured by XRD and a specific surface area of 100 m²/g to 196 m²/g.

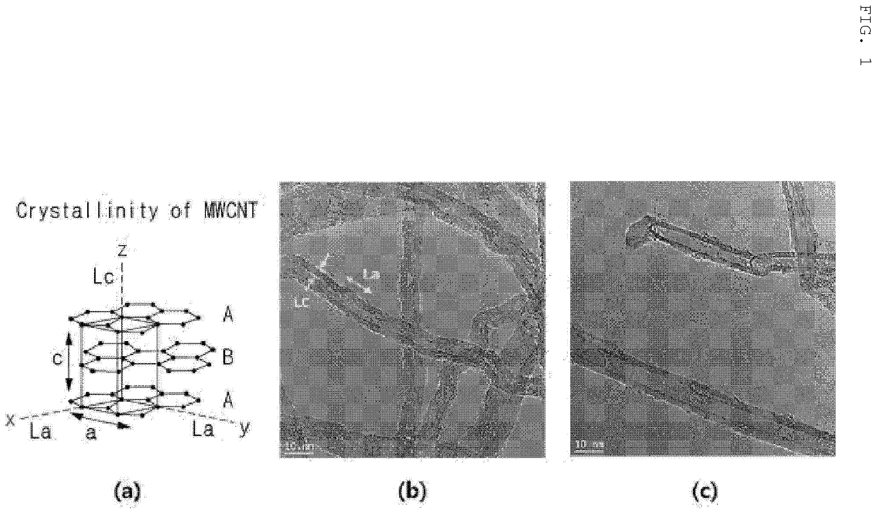

When the carbon nanotube is prepared, there are variables such as a) the gradient change in concentration of a hydrocarbon gas to a catalyst, b) the solubility of carbon atoms and the diffusion thereof in a catalyst according to a pseudo-melting state of the catalyst, and c) the temperature change while carbon atoms are arranged from a catalyst and grow (an exothermic reaction when a hydrocarbon gas is decomposed on the catalyst and an endothermic reaction when carbon atoms are rearranged in the catalyst to grow a carbon nanotube). Since the variables are slightly changed when preparing a carbon nanotube, in general, during the growth of a carbon nanotube, it is difficult for carbon nanotubes to continuously grow without defects along a growth direction (longitudinal direction or long-axis direction), and the carbon nanotubes inevitably have quiescence according to an instantaneous change in variables. Accordingly, a carbon nanotube is formed with nodes similar to that of the bamboo shape, and the length between nodes (growth unit) corresponds to a growth unit length of the carbon nanotube. At this time, the La(100) is a parameter reflecting the growth unit length and the crystallinity of the growth unit (see (a) of FIG. 1)).

In the present invention, a fluidized bed reactor having a large gas flow change and a large gradient (change) of a reaction temperature, particularly an ultra-large fluidized bed reactor is used, and a carbon nanotube is prepared at a relatively low temperature, so that the continuous growth of the carbon nanotube is intentionally prevented. Therefore, a carbon nanotube having a short growth unit length and a low crystallinity may be obtained.

When XRD is measured for the carbon nanotube, an La(100) is less than 7.0 nm, preferably 5.0 nm to 7.0 nm, more preferably 5.00 nm to 6.98 nm. Instead of being in the form which has no nodes or has a long growth unit length (a shape close to a straight line, see (c) of FIG. 1), the carbon nanotube has a short growth unit length and includes a plurality of nodes, and thus, may have a high flexibility (see (b) of FIG. 1). Accordingly, an active material particle surface and the carbon nanotube may be further smoothly adhered to each other, so that the resistance in an electrode may be reduced. Preferably, the La(100) may be 5.00 nm to 6.82 nm.

When graphitization treatment is performed on carbon nanotubes at about 2500°C, the crystallinity of portions thereof having a low crystallinity is increased, so that a curved shape due to the low crystallinity is changed into a linear shape. At this time, carbon nanotube tissues of both sides of the nodes are not interconnected due to the presence of the nodes.

In the case of a typical carbon nanotube having a tube-type high-crystallinity sp² structure, there are not many defects between nodes, so that the La(100) does not significantly increase even though graphitization treatment is performed at about 2500°C. On the other hand, since the carbon nanotube of the present invention has a low crystallinity and has a short growth unit structure, defects which cause a low crystallinity are eliminated during graphitization treatment (a curved shape due to the defects causing a low crystallinity is present between the nodes, but the curved shape is changed into a linear shape when graphitization treatment is performed), thereby increasing a La(100) value, and this increase amount is large compared to a typical carbon nanotube having a high crystallinity and a long growth unit. In addition, since the carbon nanotubes of the present invention have a short growth unit, both La(100) values before and after the graphitization treatment are small compared to a typical carbon nanotube having a high crystallinity and a long growth unit.

The carbon nanotube of the present invention has the following features. In the carbon nanotube, the B-A value is 0.70 nm or greater, preferably 0.70 nm to 2.00 nm. Here, A is an La(100) (unit: nm) when XRD is measured for the carbon nanotube before graphitization treatment at 2500°C, and B is an La(100) (unit: nm) when XRD is measured for the carbon nanotube after the graphitization treatment. The duration of the graphitization treatment may be 10 minutes or more. When a carbon nanotube is subjected to graphitization treatment at a high temperature of 2500°C or higher (in the specification, the treatment is performed at 2500°C for the confirmation of a B-A value), the crystallinity of the carbon nanotube reaches a maximum value. In the case of a typical carbon nanotube, the B-A is less 0.70 nm, which means the typical carbon nanotube has a high crystallinity even before graphitization treatment. That is, the typical carbon nanotube has a low flexibility due to the high crystallinity thereof, so that it is difficult for active material particles and the carbon nanotube to adhere to each other, so that the resistance of a battery is increased. On the other hand, when a B-A is 0.70 nm or greater, it means that the carbon nanotube of the present embodiment has a low crystallinity (crystallinity in a growth unit) and a high flexibility before graphitization treatment is performed. Accordingly, active material particles and the carbon nanotube may be smoothly adhered to each other and present in an electrode. Therefore, the resistance of the battery may be reduced. More preferably, the B-A may be 0.80 nm to 2.00 nm.

In the carbon nanotube, a D-C value is 0.18 nm or less, preferably 0 nm to 0.15 nm, more preferably 0 nm to 0.1 nm. Here, C is an Lc(002) (unit: nm) when XRD is measured for the carbon nanotube before graphitization treatment at 2500°C, and D is an Lc(002) (unit: nm) when XRD is measured for the carbon nanotube after the graphitization treatment. The duration of the graphitization treatment may be 10 minutes or more. The Lc(002) of the carbon nanotube is a parameter corresponding to the thickness of a carbon layer (cylindrical layer) composed of a plurality of layers (wall) in a multi-walled carbon nanotube. That is, the D-C represents a change in thickness of the carbon layer. A typical carbon nanotube has a high crystallinity in the growth direction but has a low crystallinity in the thickness direction of a carbon layer, so that a D-C exceeds 0.18 nm. This may be due to impurities present on the surface of the carbon nanotube. The impurities are amorphous carbon materials generated due to the incomplete combustion of a hydrocarbon gas on the surface of a carbon nanotube (see (c) of FIG. 1) and mean impurities in a rough form which are observed on the surface of a carbon nanotube having an excellent crystallinity. When the impurities are present in a significant amount, the D-C shows a high value. The impurities electrochemically cause a side reaction which causes a gas such as CO, CO₂, CH₄, or the like and deteriorate the performance of the battery. On the other hand, when a D-C value is 0.18 nm or less, it means that the amount of impurities on the surface of the carbon nanotube of the present embodiment before graphitization treatment is significantly small, and the purity of the carbon nanotube is high. Therefore, the generation of unnecessary side reactions may be suppressed, so that the performance of the battery may be improved.

When the Raman spectrum is measured for the carbon nanotube, an A_{D}/A_{G} value may be 0.9 or greater, specifically 0.9 to 2.0. When the above range is satisfied, it means that the carbon nanotube of the present embodiment has a low crystallinity and a high flexibility. Accordingly, active material particles and the carbon nanotube may be smoothly adhered to each other and present in an electrode. Therefore, the resistance of the battery may be reduced.

More specifically, the A_{D}/A_{G} value may be 0.92 to 0.96. In this case, while the crystallinity of the carbon nanotube is low, there are not many defects causing unnecessary side reactions, so that side reactions causing gases such as CO, CO₂, CH₄, or the like are suppressed to further improve the performance of the battery.

In the carbon nanotube, an E-F value may be 0.50 or greater, specifically 0.50 to 1.0. E is an A_{D}/A_{G} when the Raman spectrum is measured for the carbon nanotube before graphitization treatment at 2500°C, and F is an A_{D}/A_{G} value when the Raman spectrum is measured for the carbon nanotube after the graphitization treatment. The duration of the graphitization treatment may be 10 minutes or more. When graphitization treatment is performed on a carbon nanotube at 2500°C, the crystallinity of the carbon nanotube reaches a maximum value. In the case of a typical carbon nanotube, the E-F value is less than 0.50, which means the typical carbon nanotube has a high crystallinity even before graphitization treatment. That is, the typical carbon nanotube has a low flexibility due to the high crystallinity thereof, so that it is difficult for active material particles and the carbon nanotube to adhere to each other, so that the resistance of a battery is increased. On the other hand, when an E-F value is 0.50 or greater, it means that the carbon nanotube of the present embodiment has a low crystallinity and a high flexibility before graphitization treatment. Accordingly, active material particles and the carbon nanotube may be smoothly adhered to each other and present in an electrode. Therefore, the resistance of the battery may be reduced. More specifically, the E-F value may be 0.5 to 0.58. In this case, while the crystallinity of the carbon nanotube is low, there are not many defects causing unnecessary side reactions, so that side reactions causing gases such as CO, CO₂, or CH₄ are suppressed to further improve the performance of the battery.

In the carbon nanotube, when measuring the Raman spectrum, FWHM of a G peak (a peak near 1590 cm⁻¹) may be 60 cm⁻¹ or greater, specifically 60 cm⁻¹ to 150 cm⁻¹. FWHM corresponds to the crystallinity of the carbon nanotube. That is, in the case of a typical carbon nanotube, since FWHM is less than 60 cm⁻¹, the carbon nanotube has a high crystallinity, and accordingly, has a low flexibility. On the other hand, in the case of the carbon nanotube of the present embodiment, since FWHM is 60 cm⁻¹ or greater, it means that the carbon nanotube has a low crystallinity and a high flexibility. Accordingly, active material particles and the carbon nanotube may be smoothly adhered to each other and present in an electrode. Therefore, the resistance of the battery may be reduced.

More specifically, FWHM may be 65 cm⁻¹ to 100 cm⁻¹. In this case, while the crystallinity of the carbon nanotube is low, there are not many defects causing unnecessary side reactions, so that side reactions causing gases such as CO, CO₂, CH₄, or the like are suppressed to further improve the performance of the battery.

In the carbon nanotube, a G-H value may be 15 cm⁻¹ or greater, specifically 15cm⁻¹ to 100cm⁻¹. G is FWHM of a G peak (unit: cm⁻¹) when the Raman spectrum is measured for the carbon nanotube before graphitization treatment at 2500°C, and H is FWHM of the G peak (unit: cm⁻¹) when the Raman spectrum is measured for the carbon nanotube after the graphitization treatment. In the case of a typical carbon nanotube, the G-H value is less than 15 cm⁻¹, which means the typical carbon nanotube has a high crystallinity even before graphitization treatment. That is, the typical carbon nanotube has a low flexibility due to the high crystallinity thereof, so that it is difficult for active material particles and the carbon nanotube to adhere to each other, so that the resistance of a battery is increased. On the other hand, when a G-H value is 15 cm⁻¹ or greater, it means that the carbon nanotube of the present embodiment has a low crystallinity and a high flexibility before graphitization treatment. Accordingly, active material particles and the carbon nanotube may be smoothly adhered to each other and present in an electrode. Therefore, the resistance of the battery may be reduced.

More specifically, the G-H value may be 20 cm⁻¹ to 30 cm⁻¹. In this case, while the crystallinity of the carbon nanotube is low, there are not many defects causing unnecessary side reactions, so that side reactions causing gases such as CO, CO₂, or CH₄ are suppressed to further improve the performance of the battery.

The specific surface area of the carbon nanotube is 100 m²/g to 196 m²/g, preferably 150 m²/g to 185 m²/g. When the above specific surface area is satisfied, side reactions with an electrolyte solution may be minimized and the dispersion in an electrode may be smoothly achieved. Even when the carbon nanotube is used in a small amount, a conductive network in the electrode may be efficiently formed and the content of a binder may be reduced. The above specific surface area is lower than that of a common carbon nanotube, and this may be a result derived through the control of preparation conditions for a supported catalyst, and the like.

The carbon nanotube may include a functional group containing oxygen atoms. Specifically, the functional group may include at least one selected from the group consisting of a carbonyl group, a carboxyl group, and a hydroxyl group.

The functional group containing oxygen atom may be included in the carbon nanotube in an amount of 1.2% wt% or greater, specifically 1.5 wt% to 5.0 wt%. The content range of the functional group is derived by the preparation method introduced in the present invention, and after preparing a carbon nanotube, no separate oxygen treatment is applied. When the above range is satisfied, since the carbon nanotube may be smoothly dispersed in a conductive material dispersion (carbon nanotube dispersion) and an electrode slurry, the powder resistance of the electrode slurry is lowered, and the lifespan properties of a battery may be improved.

More specifically, the functional group containing oxygen atom may be included in the carbon nanotube in an amount of 1.7 wt% to 3.0 wt%. In this case, the performance of the battery may be improved due to the excellent electrical conductivity of the carbon nanotube while it is possible to achieve a smooth dispersion as described above.

The carbon nanotube may be a multi-walled carbon nanotube. When the carbon nanotube is a multi-walled carbon nanotube, the carbon nanotube has the above-described growth unit length even with a cheap process, and may be smoothly dispersed in an electrode while having excellent conductivity and flexibility. On the other hand, when the carbon nanotube is a single-walled carbon nanotube, a catalyst of ultra-fine particles of around 1 nm is used and the carbon nanotube is prepared at a high temperature of 900°C or higher, so that manufacturing cost is high, and a prepared carbon nanotube has an excessively high crystallinity and has no node structure, so that there is a problem in that the contact with active material particles is deteriorated.

The average particle diameter of the carbon nanotube may be 10 nm to 30 nm, specifically 10 nm to 15 nm. When the above range is satisfied, the specific surface area of the carbon nanotube is reduced, so that the dispersion in an electrode may be smoothly archived and a conductive network may be efficiently formed.

### <Method for preparing carbon nanotube>

The method for preparing a carbon nanotube of the present invention may include supporting a mixture containing a main catalyst precursor and a co-catalyst precursor on a support to prepare an active carrier, performing heat treatment on the active carrier to prepare a supported catalyst, and introducing a hydrocarbon gas and an inert gas into a fluidized bed reactor in a state in which the internal temperature of the fluidized bed reactor having the supported catalyst disposed thereinside is 500°C to 700°C to obtain a carbon nanotube.

In the step of preparing an active carrier, a catalyst may include a main catalyst and a co-catalyst. The main catalyst may be, for example, at least one metal selected from the group consisting of Groups 3 to 12 of the Periodic Table of the Elements of Group 18 recommended by IUPAC in 1990. Among the above, at least one metal selected from the group consisting of Groups 3, 5, 6, 8, 9, and 10 is preferable, and in particular, at least one metal selected from iron (Fe), nickel (Ni), cobalt (Co), chromium (Cr), molybdenum (Mo), tungsten (W), vanadium (V), titanium (Ti), ruthenium (Ru), rhodium (Rh), palladium (Pd), platinum (Pt) and a rare earth element is preferable. In addition, a compound containing a metal element acting as the catalyst thereof, that is, a catalyst metal precursor, is not particularly limited as long as it is a compound containing a catalyst metal such as an inorganic salt such as a nitrate, a sulfate, and a carbonate of a catalyst metal, an organic salt such as an acetate, an organic complex such as an acetylacetone complex, an organic metal compound, and the like. The main catalyst may be particularly Co, and it may be preferable that the main catalyst precursor includes at least one selected from the group consisting of Co(NO₃)₂, Co(NO₃)₂·6H₂O, Co₂(CO)₈, Co₂(CO)₆[HC=C(C(CH₃)₃)], and Co(CH₃CO₂)₂. When the main catalyst precursor is used, it is possible to synthesize a carbon nanotube at a relatively low temperature compared to other catalysts, and since carbon affinity is low, it is advantageous in controlling the growth unit length of the carbon nanotube to be short. In addition, in the case of the Co catalyst, even if the catalyst is not removed after the preparation of a carbon nanotube, the catalyst does not precipitate on the surface of an electrode, thereby not forming dendrites, so that it is also advantageous in terms of the stability of a battery and battery manufacturing cost.

In the step of preparing an active carrier, a co-catalyst may be used in addition to the main catalyst. Reaction activity may be controlled through a co-catalyst. As the co-catalyst, one or more elements selected from iron (Fe), cobalt (Co) and nickel (Ni) and an element selected from titanium (Ti), vanadium (V), chromium (Cr), molybdenum (Mo) and tungsten (W) may be used. Among the above, the co-catalyst may preferably include vanadium. Specifically, the co-catalyst precursor may include at least one selected from the group consisting of NH₄VO₃, NaVO₃, V₂O₅, and V(C₅H₇O₂)₃. When the co-catalyst precursor is used, the preparation of the carbon nanotube of the present invention, which has a uniform diameter distribution, a short growth unit structure, and a low crystallinity is facilitated.

In the step of preparing an active carrier, in order to prepare an active carrier in which the main catalyst precursor and the co-catalyst precursor are uniformly supported on a support, the mixture may further include a solvent, and the main catalyst precursor and the co-catalyst precursor may be in a solution state dissolved in the solvent. The solvent may be one or more selected from the group consisting of water, methanol and ethanol, and among the above, water is preferred.

The mixture may include the main catalyst precursor and the co-catalyst precursor such that the molar ratio of the main catalyst and the co-catalyst is to be 10:1 to 1:1, preferably 10:1 to 2.33:1. When the above-described molar ratio is satisfied, the dispersibility of the main catalyst may be significantly improved while the reactivity of the main catalyst is maintained. In addition, when a catalyst is supported, it is effective to support a main catalyst in a well dispersed form by adjusting the acid point of the surface of a support using a co-catalyst.

In the step of preparing an active carrier, the catalyst may be impregnated into a support. The support may include at least one of Al₂O₃, SiO₂, MgO, Mg(NO₃)₂, colloidal silica, and a carbon-based support. The carbon-based support may include activated carbon, carbon black, graphite, a carbon fiber, a graphene, a carbon nanotube, and the like. When the carbon-based support is used, the specific surface area and the surface oxygen functional group of the support may be controlled to adjust the size and reactivity of the catalyst together.

The catalyst may be included in the support by sonicating the mixture containing the main catalyst precursor and the co-catalyst precursor together with a support, or may be included by a wet impregnation method. In the active carrier, the catalyst may be included in an amount of 5 parts by weight to 20 parts by weight, specifically 5 parts by weight to 10 parts by weight based on 100 parts by weight of the support.

The mixture may further include an organic acid which suppresses the precipitation of a main catalyst precursor and a co-catalyst precursor and adjusts the pH value adjustment of a solution, thereby adjusting the surface charge of a support. The organic acid may be one or more selected from the group consisting of citric acid, tartaric acid, fumaric acid, malic acid, acetic acid, butyric acid, palmitic acid, and oxalic acid, and among the above, citric acid is preferred. The mixture may include the organic acid and the co-catalyst precursor in a weight ratio of 1:0.2 to 1:2, and preferably 1:0.5 to 1:1.5. When the above-mentioned range is satisfied, it is possible to suppress the generation of fine powder caused by the precipitation of a main catalyst and a co-catalyst after the supporting, and as a result, there is an advantage in that a mixture in a solution state including a main catalyst and a co-catalyst is transparently produced. If precipitation occurs in the mixture in a solution state, the main catalyst and the co-catalyst are not uniformly coated on the support, so that a non-uniform supported catalyst may be prepared. In addition, the non-uniform supported catalyst generates a large amount of fine powder during the growth of a carbon nanotube, and thus, may become a cause of troubles during a preparation process of the carbon nanotube.

In the step of performing heat treatment on the active carrier to prepare a supported catalyst, the heat treatment may be performed at 700°C to 900°C, and specifically 700°C to 850°C. Through the above heat treatment, a supported catalyst in which the main catalyst and the co-catalyst are present in a state of being coated on the surface and the pores of the support is prepared. In addition, the above heat treatment temperature range is one of the reasons that the specific surface area of a carbon nanotube to be finally prepared is as low as 100 m²/g to 196 m²/g. The heat treatment may be performed in an atmospheric atmosphere or an oxygen atmosphere, and may be performed for 5 hours to 15 hours, specifically 7 hours to 12 hours. In addition, the heat treatment may be performed in a dry air atmosphere.

In the step of obtaining a carbon nanotube, a fluidized bed reactor may be used. The carbon nanotube of the present invention is prepared through a fluidized bed reactor, so that turbulence is likely to occur inside the fluidized bed reactor, and the active carrier is mixed with airflow, so that the growth conditions of the carbon nanotubes may not be constant. Accordingly, a carbon nanotube having a short growth unit length, a low crystallinity, and having a shape to a bamboo may be prepared. If a fixed bed reactor is to be used, only when reaction conditions such as reaction temperature, concentration, flow rate, and duration are strictly controlled, a carbon nanotube close to the carbon nanotube of the present invention may be prepared, but the yield thereof is not high. Therefore, it is desirable to use a fluidized bed reactor to simplify a process and reduce manufacturing cost.

In particular, the fluidized bed reactor is preferably a fluidized bed reactor in which the capacity of the internal reaction vessel is 0.5 m³ or greater, specifically 1.0 m³ or greater, more specifically 1.0 m³ to 6.0 m³, for example, 1.0 m³ to 3.0 m³. This means that the fluidized bed reactor has a very large capacity compared to a typical fluidized bed reactor, thereby easily forming turbulence of a rapid flow rate in the fluidized bed reactor, and there is an advantage in that the change in internal temperature is large. Accordingly, the carbon nanotube of the present invention may be smoothly prepared.

In order to obtain the carbon nanotube, a hydrocarbon gas and an inert gas may be introduced into the fluidized bed reactor in which the supported catalyst is disposed. That is, in the above step, a chemical vapor synthesis method may have been performed.

To describe in more detail, first, the supported catalyst can be introduced into the fluidized bed reactor. Subsequently, the hydrocarbon gas, or the hydrocarbon gas and the inert gas may be injected at a temperature equal to or higher than the pyrolysis temperature of the hydrocarbon gas in a gaseous state or at a temperature equal to or lower than the melting point of a catalyst supported in the supported catalyst to grow a carbon nanotube by a chemical vapor synthesis method through the decomposition of the hydrocarbon gas in a gaseous state. At this time, the hydrocarbon gas and the inert gas may be injected in a mixed gas form, and the gas to be injected may further include a reducing gas.

The hydrocarbon gas may be a carbon-based compound having 6 or less carbon atoms, and any substance capable of being present in a gas phase at a temperature of 150°C or higher may be used without particular limitation. Specifically, the hydrocarbon gas may include at least one selected from the group consisting of carbon monoxide, methane, ethane, ethylene, ethanol, acetylene, propane, propylene, butane, butadiene, pentane, pentene, cyclopentadiene, hexane, cyclohexane, benzene and toluene. However, the embodiment of the present invention is not necessarily limited thereto.

The inert gas may include at least one selected from the group consisting of nitrogen and hydrogen, and may preferably include nitrogen and hydrogen. The inert gas carries a hydrocarbon gas, suppresses the combustion of a carbon nanotube, and helps the decomposition of the hydrocarbon gas.

The hydrocarbon gas and the inert gas may be used in a volume ratio of 0.1 to 10:1 to 11, specifically 0.5 to 1.5:1.5 to 3.0. Among the above, the inert gas may include only nitrogen, or include nitrogen and hydrogen in a volume ratio of 1:0.01 to 10, specifically 1:0.5 to 1.5.

The inflow rate of the mixed gas containing the hydrocarbon gas and the inert gas may be 10 sccm to 50,000 sccm, specifically 1,000 sccm to 45,000 sccm, and more specifically 6,000 sccm to 30,000 sccm.

A step of obtaining a carbon nanotube by introducing a hydrocarbon gas and an inert gas into a fluidized bed reactor in a state in which the internal temperature of the fluidized bed reactor having the supported catalyst disposed thereinside is 500°C to 700°C is proceeded.

In the step of obtaining a carbon nanotubes, the internal temperature of the fluidized bed reactor may be 500°C to 720°C, specifically 600°C to 720°C, more specifically 620°C to 720°C. When the above temperature is lower than 500°C, the amount of unreacted hydrocarbon gas is excessively increased, so that there is a problem of yield decrease. When the above temperature is higher than 720°C, there is a problem of yield decrease due to the pyrolysis of a hydrocarbon gas.

The step of obtaining a carbon nanotubes may be performed for 0.5 hours to 10 hours, specifically 0.5 hours to 5 hours, more specifically 0.7 hours to 3 hours. In other words, the above range means the period of time for reacting the hydrocarbon gas in the fluidized bed reactor in the presence of the supported catalyst. When the above range is satisfied, it is possible to maximize the synthesis yield of a carbon nanotube controlled to have a short growth unit length.

In the step of obtaining a carbon nanotube, a reducing gas such as hydrogen may be additionally introduced.

That is, in order to prepare the carbon nanotube of the present invention, the main catalyst used, a co-catalyst, the inflow rate of a hydrocarbon gas, the inflow rate of an inert gas, a fluidized bed reactor, the period of time for reacting the hydrocarbon gas in the fluidized bed reactor should all be adjusted to an appropriate level.

### <Electrode>

An electrode according to another embodiment of the present invention may include the carbon nanotubes of an embodiment described above. Since the carbon nanotubes included in the electrode and the carbon nanotubes of the embodiment described above are the same, hereinafter, the description of the carbon nanotubes will be omitted.

The electrode may be at least one of a positive electrode and a negative electrode.

The electrode may include an electrode active material layer, and may include a current collector and an electrode active material layer disposed on the current collector in some cases.

The current collector is not particularly limited as long as it has conductivity without causing a chemical change in a battery. For example, as the current collector, copper, stainless steel, aluminum, nickel, titanium, fired carbon, or aluminum or stainless steel that is surface-treated with one of carbon, nickel, titanium, silver, and the like may be used. Specifically, a transition metal which adsorbs carbon such as copper and nickel well may be used as the current collector.

The electrode active material layer may include active material particles.

When the electrode is a positive electrode, the active material particles may include positive electrode active material particles commonly used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as Li_{1+c1}Mn_{2-c1}O₄ (0≤c1≤0.33), LiMnO₃, LiMn₂O₃, and LiMnO₂; lithium copper oxide (Li₂CuO₂); a vanadium oxide such as LiV₃O₈, V₂O₅, and Cu₂V₂O₇; a Ni-site type lithium nickel oxide represented by the formula LiNi_{1-c2}M_{c2}O₂ (wherein M is any one of Co, Mn, Al, Cu, Fe, Mg, B or Ga, and 0.01≤c2≤0.3); a lithium manganese composite oxide represented by the formula LiMn_{2-c3}M_{c3}O₂ (wherein, M is any one of Co, Ni, Fe, Cr, Zn, or Ta, and 0.01≤c3≤0.1), or by the formula Li₂Mn₃MO₈ (wherein, M is any one of Fe, Co, Ni, Cu, or Zn) ; LiMn₂O₄ having a part of Li in the formula substituted with an alkaline earth metal ion, and the like, but is not limited thereto.

When the electrode is a negative electrode, the active material particles may include negative electrode active material particles commonly used. Specifically, the negative electrode active material particles may include graphite-based active material particles or silicon-based active material particles. As the graphite-based active material particles, one or more selected from the groups consisting of artificial graphite, natural graphite, a graphitized carbon fiber, and a graphitized mesocarbon microbead may be used. Particularly, when artificial graphite is used, it is possible to improve rate properties. As the silicon-based active material particles, one or more selected from the group consisting of Si, SiOₓ (0<x<2), an Si-C composite, and an Si-Y alloy (wherein Y is an element selected from the group consisting of an alkali metal, an alkaline earth metal, a transition metal, a Group 13 element, a Group 14 element, a rare earth element, and a combination thereof) may be used. Particularly, when Si is used, it is possible to derive a high capacity of a battery. The negative electrode active material particles are not limited to the above-described types. Any negative electrode active material particle which may be commonly used may be applicable.

The electrode active material layer may further include a binder. The binder may include at least one selected from the group consisting of a polyvinylidene fluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, poly acrylic acid, a material having the hydrogen thereof substituted with Li, Na, or Ca and the like, and a combination thereof. In addition, the binder may include various copolymers thereof. The binder is not limited to the above-described types. Any binder which may be commonly used may be applicable.

### <Secondary battery>

A secondary battery according yet another embodiment of the present invention may include a negative electrode, a positive electrode, a separator interposed between the positive electrode and the negative electrode, and an electrolyte, wherein at least one of the positive electrode and the negative electrode may be the electrode of another embodiment described above.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the preparation of a lithium secondary battery, but is not limited thereto.

Specifically, the electrolyte may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

In particular, among the carbonate-based organic solvents, a cyclic carbonate such as ethylene carbonate and propylene carbonate may preferably be used since it is an organic solvent of high viscosity and has high dielectric constant to dissociate a lithium salt well. Such a cyclic carbonate may be more preferably used since when it is mixed with a linear carbonate of low viscosity and low dielectric constant such as dimethyl carbonate and diethyl carbonate in an appropriate ratio, an electrolyte having a high electric conductivity is prepared.

As the metal salt, a lithium salt may be used. The lithium salt is a material which is easily dissolved in the non-aqueous electrolyte solution. For example, as an anion of the lithium salt, one selected from the group consisting of F-, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included.

According to yet another embodiment of the present invention, a battery module including the secondary battery as a unit cell, and a battery pack including the same are provided. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

Hereinafter, preferred embodiments of the present invention will be described in detail to facilitate understanding of the present invention. However, the embodiments are merely illustrative of the present invention, and thus, it will be apparent to those skilled in the art that various modifications and variations can be made without departing from the scope of the present invention as disclosed in the accompanying claims. It is obvious that such variations and modifications fall within the scope of the appended claims.

### Examples and Comparative Examples

### Example 1: Preparing carbon nanotube

### (1) Preparing supported catalyst

An aluminum oxide support obtained by firing aluminum-tri-hydroxide (Al(OH)₃) at 250-500°C was used.

A Co-V metal catalyst was prepared by introducing Co(NO₃)₂6H₂O as a precursor material of Co, NH₄VO₃ as a precursor material of V, and citric acid together, wherein the molar ratio of Co:V was 10:1. Finally, the Co-V catalyst described above and the support were subjected to water-based stirring in a constant temperature bath of 60°C at a ratio of 1:10, and then a vacuum-dried supported catalyst was fired for 10 hours at 700°C or higher in a dry air atmosphere to prepare a supported catalyst.

### (2) Preparing carbon nanotubes

The supported catalyst described above was placed in a fluidized bed reactor (Pilot Scale Reactor (Capacity of internal reaction vessel: 1 m³)) and then a mixed gas in which ethylene:hydrogen:nitrogen were mixed at a volume ratio of 1:1:5 was injected at an inflow rate of 7,000 sccm into the fluidized bed reactor having an internal temperature of 700°C to prepare carbon nanotubes having an average diameter of 12 nm.

### Example 2: Preparing carbon nanotubes

Carbon nanotubes having an average diameter of 12 nm were prepared in the same manner as in Example 1 except that Commercial Scale Reactor (Capacity of internal reaction vessel: 4 m³ ) was used as a fluidized bed reactor and the inflow rate of the mixed gas was changed to 28,000 sccm.

### Comparative Example 1: Preparation of carbon nanotubes

Carbon nanotubes having an average diameter of 10 nm and a specific surface area of 238 m²/g were prepared among commercial products of C-Nano Co., Ltd.

### Comparative Example 2: Preparation of carbon nanotubes

Carbon nanotubes having an average diameter of 10 nm and a specific surface area of 249 m²/g were prepared among commercial products of BTR Co., Ltd.

### Comparative Example 3: Preparation of carbon nanotubes

Carbon nanotubes having an average diameter of 45 nm and a specific surface area of 85 m²/g were prepared among commercial products of BTR Co., Ltd.

### Comparative Example 4: Preparation of carbon nanotubes

Carbon nanotubes having an average diameter of 8 nm and a specific surface area of 350 m²/g were prepared among commercial products of JEIO Co., Ltd.

The physical properties of the carbon nanotubes of each of Examples 1 and 2 and Comparative Examples 1 to 4 are summarized in Tables 1 and 2.

**[Table 1]**

| | A: La (10 0) befor e graph itiza tion (nm) | B: La (10 0) after graph itiza tion (nm) | B-A (nm) | C: Lc (00 2) befor e graph itiza tion (nm) | D: Lc (00 2) after graph itiza tion (nm) | D-C (nm) | Speci fic surfa ce area (m²/g) |
|---|---|---|---|---|---|---|---|
| Example 1 | 6.8 | 7.6 | 0.8 | 4.0 | 4.0 | 0.0 | 181 |
| Example 2 | 6.7 | 7.5 | 0.8 | 3.9 | 4.0 | 0.1 | 185 |
| Comparati ve Example 1 | 7.2 | 7.8 | 0.6 | 3.3 | 3.5 | 0.2 | 238 |
| Comparati ve Example 2 | 7.1 | 7.7 | 0.6 | 3.8 | 4.0 | 0.2 | 249 |
| Comparati ve Example 3 | 6.8 | 7.8 | 1.0 | 15.4 | 15.7 | 0.3 | 85 |
| Comparati ve Example 4 | 6.9 | 6.1 | 1.2 | 2.5 | 2.5 | 0.0 | 350 |

The La(100) and the Lc(002) were derived by measuring carbon nanotubes by X-ray diffraction (XRD) analysis. Specifically, the XRD analysis was performed using Bruker AXS D4 Endeavor XRD (voltage: 40 kV, current: 40 mA), and was measured under a Cu Ka radiation (wavelength: 1.54 Å) condition at a scanning speed of 87.5 seconds per 0.02° from 2-Theta 10° to 90°. Among the measurement results, the full width at half-maximum (FWHM) of a (002) crystal peak in which 2θ appears near 20° to 30° and the full width at half-maximum of a (100) crystal peak in which 2θ appears near 38° to 50° were measured, and an Lc(002) value and an La(100) value were obtained by calculating through the Scherrer equation. The graphitization means that the carbon nanotubes were heat treated for 1 hour at 2500°C.

The specific surface area was measured by a BET method, and specifically, was calculated by obtaining the amount of nitrogen gas adsorption at a liquid nitrogen temperature (77 K) using BELSORP-mini II of BEL Japan Co., Ltd.

**[Table 2]**

| | E: A_{D}/A_{G} befor e graph itiza tion | F: A_{D}/A_{G} after graph itiza tion | E-F | G: FWHM befor e graph itiza tion (cm⁻¹) | H: FWHM after graph itiza tion (cm⁻¹) | G-H (cm⁻¹) | Conte nt of funct ional group conta ining oxyge n atom (wt%) |
|---|---|---|---|---|---|---|---|
| Example 1 | 0.94 | 0.40 | 0.54 | 63.5 | 38.8 | 24.7 | 1.8 |
| Example 2 | 0.98 | 0.39 | 0.59 | 63.6 | 39.3 | 24.3 | 1.9 |
| Comparati ve Example 1 | 0.73 | 0.36 | 0.37 | 48.0 | 39.2 | 8.8 | 0.2 |
| Comparati ve Example 2 | 0.87 | 0.41 | 0.46 | 54.6 | 39.8 | 14.8 | 1.0 |
| Comparati ve Example 3 | 0.99 | 0.41 | 0.58 | 65.2 | 39.6 | 25.6 | 1.7 |
| Comparati ve Example 4 | 1.24 | 0.36 | 0.88 | 72.3 | 41.1 | 31.2 | 2.6 |

The A_{D}/A_{G} ratio corresponds to a D/G peak ratio after obtaining a spectrum through Raman Mapping at 100 points (×4 Object was used) using a Raman spectrum analysis device (NRS-2000B, Jasco) and a 532 nm laser, and then averaging the measured Raman spectrum. Here, FWHM of the G peak corresponds to the width of the horizontal axis of a point corresponding to the half value of the maximum vertical axis value of the highest peak. The content of the functional group containing oxygen atoms was measured by measuring the content of oxygen by an elemental analysis method through the ONH836 analyzer of LECO Co., Ltd.

### Experimental Example 1: Identification of carbon nanotube structure

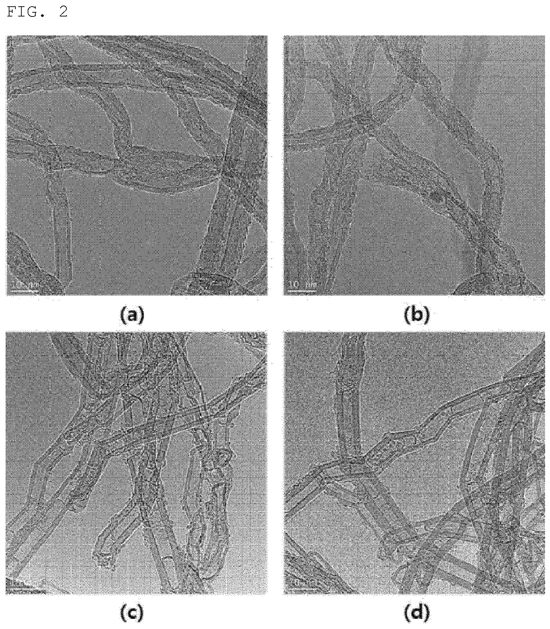

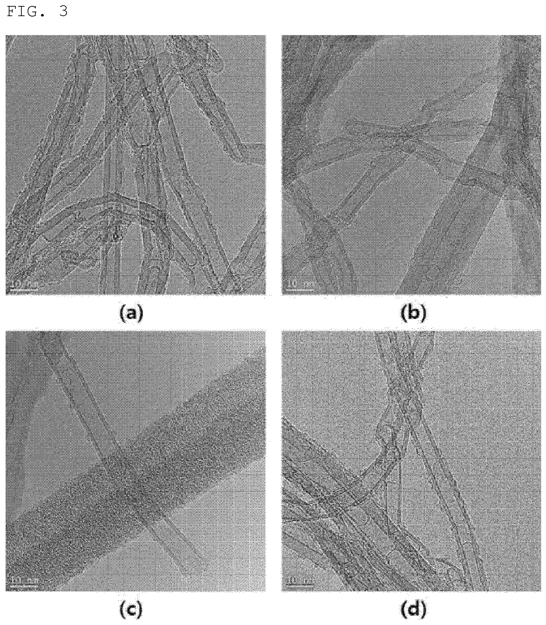

Each of the carbon nanotubes of Example 1 and Comparative Example 1 were observed through a TEM and the results are shown in FIG. 1. Specifically, FIG. 2 is TEM photographs of the carbon nanotubes of Example 1 before graphitization treatment at 2500°C ((a) and (b) of FIG. 2) and TEM photographs of the carbon nanotubes of Example 1 after the graphitization treatment ((c) and (d) of FIG. 2). FIG. 3 is TEM photographs of the carbon nanotubes of Comparative Example 1 before graphitization treatment at 2500°C ((a) and (b) of FIG. 3) and TEM photographs of the carbon nanotubes of Comparative Example 1 after the graphitization treatment ((c) and (d) of FIG. 3).

When comparing (a) and (b) of FIG. 2 and (a) and (b) of FIG. 3, it can be seen that the carbon nanotubes of Example 1 have more nodes (curved portions) and have a less linear shape than the carbon nanotubes of Comparative Example 1.

Also, referring not only to (a) and (b) of FIG. 2 and (a) and (b) of FIG. 3 but also to (c) and (d) of FIG. 2 and (c) and (d) of FIG. 3, it can be easily seen that the carbon nanotubes of Example 1 have a relatively short growth unit structure. Specifically, since each growth unit (the length between nodes) in Example 1 became to have a linear shape after the graphitization treatment, it can be seen that one linear unit and a linear unit adjacent thereto are bent at a predetermined angle. On the other hand, in the case of Comparative Example 2, even after the graphitization treatment, the bent structure observed in FIG. 2 was not observed.

### Experimental Example 2: Powder resistance of carbon nanotubes

The carbon nanotube powder resistance of the carbon nanotubes of each of Examples 1 and 2 and Comparative Examples 1 to 4 was measured in the following manner.

Using Loresta-GX (MCP-PD51) equipment, 0.5 g of carbon nanotube powder was filled in a sample holder and pressed to 400 kN, 800 kN, 1200 kN, 1600 kN, and 2000 kN to evaluate a powder resistance value (Ohm·cm) at 60 MPa.

### Experimental Example 3: Powder resistance of electrode slurry

The carbon nanotubes of each of Examples 1 and 2 and Comparative Examples 1 to 4 were used to prepare an electrode slurry in the following manner.

Li[Ni_{0.6}Mn_{0.2}Co_{0.2}]O₂ which is a positive electrode active material, each of the carbon nanotube described above, polyvinylidene fluoride (PVdF) which is a binder, H-NBR which is a dispersion agent, and NMP which is a solvent were mixed/stirred to prepare a positive electrode slurry having a solid content of 72%. In the positive electrode slurry, the weight ratio of the positive electrode active material, the carbon nanotubes, PVdF, and H-NBR was 96.2:1.5:2.0:0.3.

Thereafter, the powder resistance of the electrode slurry was measured in the following manner.

The electrode slurry prepared using the carbon nanotubes of each of Examples 1 and 2 and Comparative Examples 1 to 4 was vacuum-dried for 3 hours at a temperature of 130°C, and then pulverized to prepare powder. Thereafter, using Loresta GP equipment of Mitsubishi Chem Analytic Co., Ltd, pellets were prepared in an atmosphere of 25°C and a relative humidity of 50% under the condition of a 9.8 MPa load. Thereafter, the powder resistance was measured by a 4-probe method.

### Experimental Example 4: Evaluation of capacity retention rate (lifespan properties) of battery

Each of the electrode slurries prepared in Experimental Example 3 was used to manufacture an electrode in the following manner.

The electrode slurry was applied on a positive electrode current collector (Al) having a thickness of 20 um and then dried such that the solid weight (loading amount) was to be 21 mg/cm². Thereafter, the current collector on which the positive electrode slurry was disposed was roll-pressed by a roll-pressing method to adjust the overall thickness thereof to be 77 um. Thereafter, the current collector was dried for 6 hours in a vacuum oven of 130°C to manufacture a positive electrode.

Artificial graphite which is a negative electrode active material, carbon black which is a negative electrode conductive material, styrene-butadiene rubber (SBR) and carboxy methyl cellulose (CMC) which are binder were mixed in distilled water at a weight ratio of 96.1:0.5:2.3:1.1 respectively to prepare a negative electrode slurry. The prepared slurry was applied on a negative electrode current collector (Cu) having a thickness of 20 um and then dried such that the solid weight (loading amount) was to be 10 mg/cm². Thereafter, the current collector on which the negative electrode slurry was formed was roll-pressed by a roll-pressing method to adjust the final thickness (current collector + active material layer) to be 80 um. Thereafter, the current collector was dried for 6 hours in a vacuum oven of 110°C to manufacture a negative electrode.

Thereafter, the manufactured negative electrode and the manufactured positive electrode and a polyethylene-based separator having a thickness of 15 um to be interposed therebetween were assembled to manufacture a mono-cell, and then the mono-cell was injected with an electrolyte solution (ethylene carbonate (EC)/ethyl methyl carbonate (EMC)=1/2 (volume ratio), lithium hexa fluoro phosphate (1 mole of LiPF₆)) to manufacture a lithium secondary battery.

Thereafter, the capacity retention rate of the battery was evaluated in the following manner.

The high-temperature lifespan evaluation was performed on the lithium secondary battery manufactured in each of Examples 1 and 2 and Comparative Examples 1 to 4 at 45°C by fixing a charge C-Rate at 1.0 C and a discharge C-Rate at 1.0 C, and the capacity retention rate (%) thereof was evaluated at 100 cycles.

The results of Experimental Examples 2 to 4 are shown in Table 3.

**[Table 3]**

| | Powder resistance of carbon nanotubes (Ω·cm) | Powder resistance of electrode slurry (Ω·cm) | Capacity retention rate (%) of battery |
|---|---|---|---|
| Example 1 | 0.012 | 66 | 97.8 |
| Example 2 | 0.013 | 69 | 97.6 |
| Comparative Example 1 | 0.012 | 75 | 96.2 |
| Comparative Example 2 | 0.013 | 72 | 96.5 |
| Comparative Example 3 | 0.014 | 83 | 95.1 |
| Comparative Example 4 | 0.017 | 77 | 95.8 |

## Claims

1. A carbon nanotube having
(a) an La(100) value of less than 7.0 nm when measured by XRD;
(b) a specific surface area of 100 m²/g to 196 m²/g;
(c) a B-A value of 0.70 nm or greater, wherein A is an La(100) value (unit: nm) measured by XRD before graphitization treatment of the carbon nanotube at 2500°C, and B is an La(100) value (unit: nm) measured by XRD after the graphitization treatment; and
(d) a D-C value of 0.18 nm or less, wherein C is an Lc(002) value (unit: nm) measured by XRD before graphitization treatment of the carbon nanotube at 2500°C, and D is an Lc(002) value (unit: nm) measured by XRD after the graphitization treatment.

2. The carbon nanotube of claim 1 comprising a functional group containing oxygen atoms, wherein the amount of the functional group containing oxygen atoms is 1.2 wt% or greater in the carbon nanotube.

3. The carbon nanotube of claim 1 having an A_{D}/A_{G} value of 9.09 or greater when measured by the Raman spectrum.

4. The carbon nanotube of claim 1 having an E-F value of 0.50 or greater, wherein E is an A_{D}/A_{G} value when the Raman spectrum is measured for the carbon nanotube before graphitization treatment at 2500°C, and F is an A_{D}/A_{G} value when the Raman spectrum is measured for the carbon nanotube after the graphitization treatment.

5. The carbon nanotube of claim 1 being a multi-walled carbon nanotube.

6. The carbon nanotube of claim 1 having an average diameter of 10 nm to 30 nm.

7. An electrode comprising the carbon nanotube of claim 1.

8. A secondary battery comprising the electrode of claim 7.

## Patentansprüche

1. Kohlenstoff-Nanoröhre mit
(a) einem La(100)-Wert von weniger als 7,0 nm, gemessen mittels XRD;
(b) einer spezifischen Oberfläche von 100 m²/g bis 196 m²/g;
(c) einem B-A-Wert von 0,70 nm oder mehr, wobei A ein La(100)-Wert (Einheit: nm) ist, gemessen mittels XRD vor einer Graphitierungsbehandlung der Kohlenstoff-Nanoröhre bei 2500°C, und B ein La(100)-Wert (Einheit: nm) ist, gemessen mittels XRD nach der Graphitierungsbehandlung; und
(d) einem D-C-Wert von 0,18 nm oder weniger, wobei C ein Lc(002)-Wert (Einheit: nm) ist, gemessen mittels XRD vor einer Graphitierungsbehandlung der Kohlenstoff-Nanoröhre bei 2500°C, und D ein Lc(002)-Wert (Einheit: nm) ist, gemessen mittels XRD nach der Graphitierungsbehandlung.

2. Kohlenstoff-Nanoröhre gemäß Anspruch 1, umfassend eine funktionelle Gruppe, die Sauerstoffatome enthält, wobei die Anzahl der funktionellen Gruppe, die Sauerstoffatome enthält, in der Kohlenstoff-Nanoröhre 1,2 Gew.-% oder mehr beträgt.

3. Kohlenstoff-Nanoröhre gemäß Anspruch 1 mit einem A_{D}/A_{G}-Wert von 9,09 oder mehr, gemessen mittels Raman-Spektrum.

4. Kohlenstoff-Nanoröhre gemäß Anspruch 1 mit einem E-F-Wert von 0,50 oder mehr, wobei E ein A_{D}/A_{G}-Wert ist, gemessen mittels Raman-Spektrum der Kohlenstoff-Nanoröhre vor einer Graphitierungsbehandlung bei 2500°C, und F ein A_{D}/A_{G}-Wert ist, gemessen mittels Raman-Spektrum der Kohlenstoff-Nanoröhre nach der Graphitierungsbehandlung.

5. Kohlenstoff-Nanoröhre gemäß Anspruch 1, wobei diese eine mehrwandige Kohlenstoff-Nanoröhre ist.

6. Kohlenstoff-Nanoröhre gemäß Anspruch 1 mit einem mittleren Durchmesser von 10 nm bis 30 nm.

7. Elektrode, umfassend die Kohlenstoff-Nanoröhre gemäß Anspruch 1.

8. Sekundärbatterie, umfassend die Elektrode gemäß Anspruch 7.

## Revendications

1. Nanotube de carbone ayant
(a) une valeur La (100) inférieure à 7,0 nm lorsqu'elle est mesurée par XRD ;
(b) une surface spécifique de 100 m²/g à 196 m²/g ;
(c) une valeur B-A égale ou supérieure à 0,70 nm, où A est une valeur La (100) (unité : nm) mesurée par XRD avant un traitement de graphitisation du nanotube de carbone à 2500°C, et B est une valeur La (100) (unité : nm) mesurée par XRD après le traitement de graphitisation ; et
(d) une valeur D-C de 0,18 nm ou moins, où C est une valeur Lc (002) (unité : nm) mesurée par XRD avant le traitement de graphitisation du nanotube de carbone à 2500°C, et D est une valeur Lc(002) (unité : nm) mesurée par XRD après le traitement de graphitisation.

2. Nanotube de carbone selon la revendication 1, comprenant un groupe fonctionnel contenant des atomes d'oxygène, dans lequel la quantité de groupe fonctionnel contenant des atomes d'oxygène est supérieure ou égale à 1,2 % en poids dans le nanotube de carbone.

3. Nanotube de carbone selon la revendication 1, ayant une valeur A_{D}/A_{G} de 9,09 ou plus lorsqu'elle est mesurée par le spectre Raman.

4. Nanotube de carbone selon la revendication 1, ayant une valeur E-F de 0,50 ou plus, où E est une valeur A_{D}/A_{G} lorsque le spectre Raman est mesuré pour le nanotube de carbone avant le traitement de graphitisation à 2500°C, et F est une valeur A_{D}/A_{G} lorsque le spectre Raman est mesuré pour le nanotube de carbone après le traitement de graphitisation.

5. Nanotube de carbone selon la revendication 1, étant un nanotube de carbone multi-parois.

6. Nanotube de carbone selon la revendication, 1 ayant un diamètre moyen de 10 nm à 30 nm.

7. Électrode comprenant le nanotube de carbone de la revendication 1.

8. Batterie secondaire comprenant l'électrode de la revendication 7.
